# EUROPÄISCHE PATENTANMELDUNG

(11) **EP 4 374 965 A1**
(43) Veröffentlichungstag der Anmeldung: **29.05.2024**
(21) Anmeldenummer: 23210912.4
(22) Anmeldetag: 20.11.2023
(51) Int. Cl.: B01L 7/02, G05D 1/00

(54) **BADTHERMOSTAT**

(30) Priorität: 22.11.2022 DE 102022130875
(71) Anmelder: Lauda Dr. R. Wobser GmbH & Co. KG, 97922 Lauda-Königshofen (DE)
(72) Erfinder: DIRSCHERL, Jürgen, 97892 Kreuzwertheim (DE)
(74) Vertreter: Zimmermann & Partner Patentanwälte mbB

(57) **Zusammenfassung**

Badthermostat (1), umfassend einen Badbehälter (3) zur Aufnahme einer Flüssigkeit (5), wobei der Badbehälter (3) in einem oberen Bereich einen Badrand (7) aufweist, eine Umwälzvorrichtung zum Umwälzen der Flüssigkeit (5), wobei die Umwälzvorrichtung einen Umwälzvorrichtungsantrieb (21) aufweist, und eine Belüftungsvorrichtung zum Bereitstellen eines Luftstroms über den Badrand (7) des Badbehälters (3), wobei die Belüftungsvorrichtung einen Lüfter (31) mit einem Lüfterantrieb (33) aufweist.

## Beschreibung

### Gebiet der Erfindung

Die Erfindung betrifft einen Badthermostaten und ein Verfahren zum Temperieren einer Flüssigkeit in einem Badbehälter eines Badthermostats.

### Stand der Technik

Bekannte Badthermostate stellen ein für einen Benutzer zugängliches, temperiertes Flüssigkeitsbad zur Verfügung. Badbehälter bekannter Badthermostate weisen einen Badrand auf, welcher auch in befülltem Zustand des Badbehälters dem Benutzer zugänglich und der Umgebungsluft ausgesetzt ist.

Allerdings kann der Badrand bei bekannten Lösungen bei hohen Badtemperaturen heiß werden, beispielsweise so heiß, dass eine Verbrennungsgefahr für den Benutzer bestehen kann. Bei niedrigen Badtemperaturen kann am Badrand eine Kondensation von Luftfeuchtigkeit oder Eisbildung auftreten.

### Offenbarung der Erfindung

Der Erfindung liegt die Aufgabe zugrunde, einen verbesserten Badthermostat und ein verbessertes Verfahren zum Temperieren einer Flüssigkeit in einem Badbehälter eines Badthermostats anzugeben. Insbesondere sollte eine Verbrennungsgefahr oder eine Kondensation von Luftfeuchtigkeit an dem Badrand des Badthermostats vermieden oder verringert werden.

Gemäß einem Aspekt der Erfindung ist ein Badthermostat angegeben. Der Badthermostat umfasst einen Badbehälter zur Aufnahme einer Flüssigkeit, wobei der Badbehälter in einem oberen Bereich einen Badrand aufweist. Der Badthermostat umfasst weiter eine Umwälzvorrichtung zum Umwälzen der Flüssigkeit, wobei die Umwälzvorrichtung einen Umwälzvorrichtungsantrieb aufweist. Der Badthermostat umfasst eine Belüftungsvorrichtung zum Bereitstellen eines Luftstroms über den Badrand des Badbehälters, wobei die Belüftungsvorrichtung einen Lüfter mit einem Lüfterantrieb aufweist.

Gemäß einem weiteren Aspekt der Erfindung ist ein Verfahren zum Temperieren einer Flüssigkeit in einem Badbehälter eines Badthermostats angegeben. Das Verfahren umfasst ein Betreiben eines Umwälzvorrichtungsantriebs einer Umwälzvorrichtung zum Umwälzen der Flüssigkeit. Das Verfahren umfasst weiter ein Betreiben eines Lüfterantriebs einer Belüftungsvorrichtung zum Bereitstellen eines Luftstroms über einen in einem oberen Bereich des Badbehälters angeordneten Badrand des Badbehälters, wobei der Umwälzvorrichtungsantrieb und der Lüfterantrieb gleichzeitig mit verschiedenen Drehzahlen betrieben werden.

Bei typischen Ausführungsformen umfasst ein Badthermostat einen Badbehälter. Der Badbehälter umfasst typischerweise einen Kessel oder eine Wanne zur Aufnahme einer Flüssigkeit. Typischerweise ist der Kessel oder die Wanne aus Metall hergestellt, beispielsweise aus Stahl, insbesondere aus Edelstahl. Bei weiteren typischen Ausführungsformen ist der Badbehälter, insbesondere der Kessel oder die Wanne, aus Kunststoff hergestellt, beispielsweise zumindest teilweise aus transparentem Kunststoff. In weiteren Ausführungsformen kann der Badbehälter verschiedene Materialien umfassen, z.B. Metall, Glas oder Kunststoff. Beispielsweise kann der Kessel aus Stahl mit einem oder mehreren Glasfenstern ausgebildet sein.

Typischerweise ist der Badbehälter nach oben offen. Die Begriffe "oben" oder "unten" sind hierin typischerweise bezüglich der Schwerkraft zu verstehen, insbesondere wenn der Badthermostat zur zweckgemäßen Verwendung aufgestellt ist. Typischerweise ist der Badbehälter zumindest teilweise mit einer Flüssigkeit zum Bereitstellen eines Flüssigkeitsbades in dem Badbehälter befüllbar. Die Flüssigkeit kann beispielsweise Wasser sein. Alternativ kann die Flüssigkeit eine andere Flüssigkeit als Wasser sein, insbesondere mit einem höheren Siedepunkt als Wasser oder einem niedrigeren Gefrierpunkt als Wasser.

Gemäß typischen Ausführungsformen weist der Badbehälter in einem oberen Bereich einen Badrand auf. Typischerweise ist der Badbehälter nach oben hin offen, wobei die Öffnung durch den Badrand begrenzt oder von dem Badrand umschlossen ist. Typischerweise ist der Badrand der Umgebungsluft ausgesetzt, insbesondere auch bei einem mit einer Flüssigkeit befüllten Badbehälter. Bei Ausführungsformen umfasst der Badrand eine Oberseite des Badbehälters. Der Badrand kann insbesondere eine zumindest im Wesentlichen horizontale Fläche an der Oberseite des Badbehälters umfassen.

Typischerweise ist der Badbehälter für einen Benutzer des Badthermostats zugänglich. Insbesondere kann der Benutzer einen zu temperierenden Gegenstand in den Badbehälter geben, insbesondere in eine in dem Badbehälter temperierte Flüssigkeit. Bei typischen Ausführungsformen umfasst der Badthermostat eine Abdeckung zum Abdecken des Badbehälters. Die Abdeckung kann beispielsweise zumindest teilweise auf dem Badrand angeordnet oder abgelegt werden. Die Abdeckung kann den Badrand zumindest teilweise bedecken. Beispielsweise kann die Abdeckung als Deckel, insbesondere als Deckel mit Griff, ausgebildet sein. Der Deckel kann beispielsweise eine Platte, insbesondere eine Metallplatte, umfassen. Die Platte kann auf dem Badrand des Badbehälters angeordnet werden. Bei Ausführungsformen umfasst die Abdeckung mehrere Deckel, beispielsweise zwei Deckel oder drei Deckel. Bei weiteren typischen Ausführungsformen umfasst die Abdeckung genau einen Deckel.

Gemäß typischen Ausführungsformen umfasst der Badthermostat eine Umwälzvorrichtung zum Umwälzen einer in dem Badbehälter aufgenommenen Flüssigkeit. Die Umwälzvorrichtung kann insbesondere zum Bereitstellen einer im Wesentlichen homogenen Temperaturverteilung in der Flüssigkeit eingerichtet sein. Die Umwälzvorrichtung umfasst typischerweise einen Umwälzvorrichtungsantrieb. Unter einem Umwälzvorrichtungsantrieb ist hierin insbesondere der Antrieb für eine Vorrichtung zum Umwälzen der Flüssigkeit zu verstehen, insbesondere ein Antrieb für eine Umwälzpumpe. Der Umwälzvorrichtungsantrieb weist typischerweise einen Motor auf. Der Umwälzvorrichtungsantrieb kann ein Getriebe umfassen. Der Umwälzvorrichtungsantrieb ist typischerweise eingerichtet zum Antreiben einer Pumpe zum Umwälzen der Flüssigkeit.

Typischerweise umfasst der Badthermostat ein Gehäuse, insbesondere ein auf dem Badbehälter angeordnetes Gehäuse. Das Gehäuse mit den in oder an dem Gehäuse angeordneten Komponenten des Badthermostats kann auch als Badkopf bezeichnet werden. Bei typischen Ausführungsformen ist der Umwälzvorrichtungsantrieb in dem Gehäuse angeordnet. Typischerweise ist eine Pumpe der Umwälzvorrichtung in dem Badbehälter angeordnet, insbesondere unterhalb des Badrandes. Bei Ausführungsformen ist die Pumpe über eine Welle mit dem Umwälzvorrichtungsantrieb verbunden und über die Welle durch den Umwälzvorrichtungsantrieb antreibbar.

Bei typischen Ausführungsformen umfasst der Badthermostat eine Belüftungsvorrichtung. Typischerweise ist die Belüftungsvorrichtung zumindest teilweise oberhalb des Badbehälters angeordnet, insbesondere auf oder über dem Badbehälter. Die Belüftungsvorrichtung kann mit dem Gehäuse verbunden sein Typischerweise ist die Belüftungsvorrichtung in dem Gehäuse angeordnet. Typischerweise weist die Belüftungsvorrichtung einen Lüfter auf. Der Lüfter kann in dem Gehäuse des Badthermostats angeordnet sein. Typischerweise umfasst der Lüfter eine Lüfterantrieb, insbesondere einen Lüftermotor. Insbesondere ist der Lüfterantrieb verschieden von dem Umwälzvorrichtungsantrieb.

Die Belüftungsvorrichtung ist typischerweise zum Bereitstellen eines Luftstroms über den Badrand des Badbehälters eingerichtet, insbesondere eines Luftstroms entlang des Badrandes oder auf den Badrand, beispielsweise unter einem Winkel auf den Badrand. Typischerweise ist der Lüfter der Belüftungsvorrichtung dazu eingerichtet, den Luftstrom zu erzeugen. Bei Ausführungsformen kann der Luftstrom über eine auf dem Badrand angeordnete Abdeckung strömen. Insbesondere ist die Belüftungsvorrichtung gemäß typischen Ausführungsformen zum Bereitstellen eines Luftstroms über den Badrand des Badbehälters und über die Abdeckung eingerichtet, wenn die Abdeckung auf dem Badbehälter angeordnet ist.

Bei typischen Ausführungsformen umfasst die Belüftungsvorrichtung eine Luftstromführung. Die Luftstromführung kann beispielsweise zum Lenken des von dem Lüfter erzeugten Luftstroms in das Gehäuse, in dem Gehäuse oder aus dem Gehäuse heraus eingerichtet sein. Beispielsweise kann die Luftstromführung mindestens einen Einlass oder mindestens einen Auslass des Gehäuses umfassen. Der mindestens eine Auslass und der mindestens eine Einlass können jeweils eine oder mehrere Durchgangsöffnungen in dem Gehäuse umfassen. Der mindestens eine Auslass kann beispielsweise einen von dem Lüfter in dem Gehäuse erzeugten Luftstrom aus dem Gehäuse heraus und über den Badrand leiten. Der mindestens eine Auslass kann beispielsweise als ein oder mehrere Lüftungsschlitze in einer Wand des Gehäuses ausgebildet sein. Der mindestens eine Auslass kann in einem unteren Bereich des Gehäuses vorgesehen sein, insbesondere in der unteren Hälfte des Gehäuses. Typischerweise ist der mindestens eine Auslass an einer dem Badbehälter zugewandten Seite des Gehäuses angeordnet, insbesondere an einer Seite des Gehäuses, welche der durch den Badrand begrenzten Öffnung des Badbehälters zugewandt ist.

Typischerweise erlaubt der mindestens eine Einlass in das Gehäuse eine Luftströmung aus einem Außenbereich außerhalb des Gehäuses in das Gehäuse hinein, insbesondere in das Gehäuse hinein zu dem Lüfter. Gemäß Ausführungsformen ist der Lüfter an dem mindestens einen Einlass angeordnet. Insbesondere kann der Lüfter den Luftstrom in das Innere des Gehäuses blasen. Die Luftstromführung kann zum Führen des Luftstroms in dem Gehäuse ein oder mehrere Lenkelemente zum Lenken des Luftstroms in dem Gehäuse oder eine Durchführung durch eine Zwischenwand des Gehäuses umfassen.

Gemäß typischen Ausführungsformen umfasst der Badthermostat eine Temperiervorrichtung zum Heizen oder Kühlen der Flüssigkeit in dem Badbehälter, insbesondere zum Heizen und zum Kühlen der Flüssigkeit. Die Temperiervorrichtung kann eine Heizung zum Heizen der Flüssigkeit umfassen. Die Temperiervorrichtung kann zum Kühlen der Flüssigkeit eine Kühlvorrichtung aufweisen, beispielsweise einen Verdampfer einer Kompressionskälteanlage. Bei Ausführungsformen ist die Temperiervorrichtung zumindest teilweise in dem Badbehälter angeordnet, insbesondere unterhalb des Badrandes. Ein Teil der Temperiervorrichtung kann in dem Gehäuse auf dem Badbehälter angeordnet sein, beispielsweise in Halterungen des Gehäuses für eine Heizung oder für eine Kühlvorrichtung der Temperiervorrichtung. Bei Ausführungsformen umfasst das Gehäuse weitere Halterungen für mindestens einen kommunikativ mit der Steuervorrichtung verbundenen Badsensor, beispielsweise für einen Badtemperatursensor oder für einen Flüssigkeits-Niveausensor. Der mindestens eine Badsensor kann nach unten aus dem Gehäuse ragen, insbesondere unter den Badrand. Die Steuervorrichtung kann dazu eingerichtet sein, die Temperiervorrichtung oder die Umwälzvorrichtung insbesondere basierend auf der von dem Badtemperatursensor gemessenen Temperatur oder dem von dem Flüssigkeits-Niveausensor erfassten Flüssigkeits-Niveaus zu steuern.

Bei Ausführungsformen ist die Temperiervorrichtung eingerichtet zum Heizen der Flüssigkeit auf eine Maximaltemperatur oberhalb von 90°C, insbesondere oberhalb von 150°C, oberhalb von 200°C oder oberhalb von 250°C, beispielsweise auf eine Maximaltemperatur von ungefähr 300°C. Gemäß Ausführungsformen ist die Temperiervorrichtung eingerichtet zum Kühlen der Flüssigkeit auf eine Minimaltemperatur unterhalb von 0°C, insbesondere unterhalb von -50°C oder unterhalb von -70°C, beispielsweise bis zu einer Minimaltemperatur von ungefähr -100°C. Typischerweise ist die Temperiervorrichtung dazu eingerichtet, eine Flüssigkeit auf eine einstellbare Temperatur zu temperieren, wobei die Temperatur zwischen einer Minimaltemperatur und einer Maximaltemperatur gemäß hierin beschriebenen Ausführungsformen einstellbar ist, beispielsweise auf eine Temperatur zwischen ungefähr -100°C und ungefähr 300°C. Die Temperiervorrichtung ist typischerweise dazu eingerichtet sein, die hierin beschriebenen Temperaturen mit einem Badthermostat in einer Umgebung mit Raumtemperatur und insbesondere bei Auswahl einer für die Temperaturen geeigneten Flüssigkeit zu erreichen.

Insbesondere bei einem Heizen der Flüssigkeit kann der dem Benutzer zugängliche Badrand oder eine auf dem Badrand angeordnete Abdeckung heiß werden, so dass eine Berührung einer heißen Fläche durch den Benutzer droht. Bei hohen Temperaturen kann durch den heißen Badrand eine Verbrennungsgefahr für den Benutzer bestehen. Der von der Belüftungsvorrichtung bereitgestellte Luftstrom über den Badrand kann den Badrand oder eine darauf angeordnete Abdeckung zumindest teilweise kühlen und die Gefahr eines Unfalls, insbesondere eine Verbrennungsgefahr, verringern. Bei einem Kühlen der Flüssigkeit kann der der Umgebungsluft ausgesetzte Badrand abkühlen, so dass Luftfeuchtigkeit aus der Umgebungsluft an dem Badrand kondensieren kann. Bei niedrigen Temperaturen kann die Feuchtigkeit auf dem Badrand gefrieren. Der von der Belüftungsvorrichtung bereitgestellte Luftstrom kann den Badrand oder eine darauf angeordnete Abdeckung zumindest teilweise relativ zu der Temperatur der Flüssigkeit wärmen. Beispielsweise kann eine Betauung des Badrandes verhindert oder verringert werden. Typische Ausführungsformen können insbesondere eine Verbrennungsgefahr, eine Betauung oder Vereisung des Badrandes verhindern oder verringern.

Bei typischen Ausführungsformen umfasst der Badthermostat eine Steuervorrichtung. Typischerweise ist die Steuervorrichtung dazu eingerichtet, insbesondere den Umwälzvorrichtungsantrieb oder den Lüfterantrieb zu steuern. Bei typischen Ausführungsformen ist die Steuervorrichtung dazu eingerichtet, den Umwälzvorrichtungsantrieb und den Lüfterantrieb individuell oder unabhängig voneinander zu steuern. Unter einem "Steuern" kann hierin auch ein Regeln zu verstehen sein. Insbesondere kann die Steuervorrichtung zum Steuern des Umwälzvorrichtungsantriebs ein erstes Steuersignal an den Umwälzvorrichtungsantrieb übermitteln. Die Steuervorrichtung kann zum Steuern des Lüfterantriebs ein von dem ersten Steuersignal verschiedenes, zweites Steuersignal an den Lüfterantrieb übermitteln. Bei Ausführungsformen ist die Steuervorrichtung zum Steuern weiterer Komponenten des Badthermostats eingerichtet, beispielsweise zum Steuern der Temperiervorrichtung. Typischerweise weist die Steuervorrichtung eine Software oder Programmierung auf, welche die Steuervorrichtung zum Ausführen von hierin beschriebenen Operationen veranlasst, beispielsweise Operationen zum Steuern von Komponenten des Badthermostats. Bei weiteren Ausführungsformen können Programme, welche die Steuervorrichtung zum Ausführen von hierin beschriebenen Operationen veranlassen, zumindest teilweise als Hardware der Steuervorrichtung implementiert sein, beispielsweise in Form integrierter Schaltungen.

Typischerweise ist der Lüfterantrieb der Belüftungsvorrichtung drehzahlvariabel, insbesondere drehzahlsteuerbar oder drehzahlregelbar. Typischerweise kann die Drehzahl des Lüfterantriebs elektronisch durch die Steuervorrichtung vorgegeben werden. Bei Ausführungsformen ist der Umwälzvorrichtungsantrieb drehzahlvariabel. Typischerweise sind der Umwälzvorrichtungsantrieb und der Lüfterantrieb mit verschiedenen Drehzahlen betreibbar.

Bei typischen Ausführungsformen ist die Steuervorrichtung dazu eingerichtet, den Lüfterantrieb und die Umwälzvorrichtung zu steuern. Typischerweise ist die Steuervorrichtung dazu eingerichtet ist, den Umwälzvorrichtungsantrieb mit einer ersten Drehzahl und den Lüfterantrieb mit einer von der ersten Drehzahl verschiedenen, zweiten Drehzahl zu betreiben. Insbesondere kann die Steuervorrichtung individuell die Drehzahlen des Lüfterantriebs und des Umwälzvorrichtungsantriebs vorgeben. Typischerweise können die vorgegebenen Drehzahlen von der Steuervorrichtung je nach Bedarf gleich oder unterschiedlich vorgegeben werden. Eine individuelle Steuerbarkeit des Lüfters und der Umwälzvorrichtung kann den Vorteil haben, dass eine Stärke des von dem Lüfter erzeugten Luftstroms unabhängig von einer Umwälzgeschwindigkeit durch die Umwälzvorrichtung vorgegeben werden kann. Beispielsweise kann es bei einer Temperierung der Flüssigkeit in dem Badbehälter auf eine niedrige Temperatur vorteilhaft sein, eine geringe Drehzahl für den Umwälzvorrichtungsantrieb zu wählen, um einen Energieeintrag in die Flüssigkeit aufgrund der Umwälzung zu verringern. Gleichzeitig kann es vorteilhaft sein, den Lüfter mit hoher Drehzahl zu betreiben, um einen starken Luftstrom bereitzustellen, so dass eine Betauung und Vereisung des Badrandes gerade bei niedrigen Temperaturen verhindert werden kann.

Gemäß typischen Ausführungsformen ist die Steuervorrichtung oder der Umwälzvorrichtungsantrieb für die Umwälzvorrichtung zumindest teilweise in dem Gehäuse angeordnet, insbesondere in dem auf dem Badbehälter angeordneten Gehäuse. Typischerweise sind die Steuervorrichtung oder der Umwälzvorrichtungsantrieb zusammen mit dem Lüfter der Belüftungsvorrichtung in dem Gehäuse angeordnet. Bei Ausführungsformen ist die Belüftungsvorrichtung dazu eingerichtet, zumindest einen Teil des Luftstroms über die Steuervorrichtung zum Kühlen der Steuervorrichtung zu strömen, insbesondere bevor der Luftstrom aus dem Gehäuse austritt. Typischerweise ist die Belüftungsvorrichtung dazu eingerichtet, zumindest einen Teil des Luftstroms über den Umwälzvorrichtungsantrieb der Umwälzvorrichtung zum Kühlen des Umwälzvorrichtungsantriebs zu strömen. Bei typischen Ausführungsformen ist die Belüftungsvorrichtung dazu eingerichtet, zumindest einen Teil des Luftstroms über eine oder mehrere weitere Komponenten in dem Gehäuse zu lenken, beispielsweise über eine oder mehrere weitere Elektronikkomponenten des Badthermostaten in dem Gehäuse. Typischerweise wird der über die Steuervorrichtung, den Umwälzvorrichtungsantrieb oder die eine oder mehrere weiteren Komponenten geleitete Luftstrom weiter nach außen über den Badrand geleitet. Insbesondere kann der Luftstrom durch die Abwärme der Komponenten im Inneren des Gehäuses erwärmt sein. Ein erwärmter Luftstrom kann insbesondere zur Verhinderung von Betauung oder Eisbildung vorteilhaft sein. Bei hohen Temperaturen überwiegt auch bei dem erwärmten Luftstrom die kühlende Wirkung des Luftstroms gegenüber einem Kühleffekt bei unbewegter Umgebungsluft.

Bei Ausführungsformen ist in dem Gehäuse genau ein Lüfter angeordnet. Insbesondere kann der Lüfter eine Belüftungsfunktion für den Badrand und für eine oder mehrere Komponenten in dem Gehäuse erfüllen, beispielsweise für die Steuervorrichtung und den Umwälzvorrichtungsantrieb. Ausführungsformen können den Vorteil haben, dass lediglich ein Lüfter zur Erfüllung von Belüftungsfunktionen in dem Gehäuse und für den Badrand verbaut wird, wodurch beispielsweise zusätzliche Funktionen ohne oder mit nur geringen Kosten oder Montageaufwand bereitgestellt werden können. Bei weiteren Ausführungsformen können mehrere Lüfter in dem Gehäuse angeordnet sein, beispielsweise ein Lüfter für die Belüftungsvorrichtung zum Bereitstellen des Luftstroms über den Badrand und ein weiterer Lüfter zur Kühlung der Steuervorrichtung oder des Umwälzvorrichtungsantriebs.

Bei Ausführungsformen ist die Steuervorrichtung dazu eingerichtet, eine Drehzahl des Lüfterantriebs basierend auf einer Betriebsbedingung der Temperiervorrichtung vorzugeben. Typischerweise umfasst die Betriebsbedingung eine Temperatur der Flüssigkeit in dem Badbehälter. Die Temperatur der Flüssigkeit bzw. des Flüssigkeitsbades kann von einem kommunikativ mit der Steuervorrichtung verbundenen Badtemperatursensor des Badthermostats gemessen werden. Der Badtemperatursensor kann in dem Gehäuse befestigt sein. Der Badtemperatursensor kann nach unten aus dem Gehäuse in den Badbehälter ragen, insbesondere unter den Badrand und beispielsweise in die Flüssigkeit eintauchend. Bei Ausführungsformen kann die Steuervorrichtung während eines Heizens der Flüssigkeit dazu eingerichtet sein, die Drehzahl des Lüfterantriebs bei einer höheren Temperatur der Flüssigkeit als der Raumtemperatur zu erhöhen, insbesondere bei Überschreiten eines Hochtemperaturschwellwerts. Durch eine höhere Drehzahl während des Heizens kann insbesondere ein Aufheizen des Badrandes verringert werden. Die Steuervorrichtung kann dazu eingerichtet sein, während eines Kühlens der Flüssigkeit die Drehzahl des Lüfterantriebs bei einer niedrigeren Temperatur der Flüssigkeit als der Raumtemperatur zu erhöhen, insbesondere bei Unterschreiten eines Niedrigtemperaturschwellwerts. Durch eine höhere Drehzahl während des Kühlens der Flüssigkeit kann insbesondere eine Betauung oder Vereisung des Badrandes verringert oder verhindert werden.

Gemäß typischen Ausführungsformen ist die Steuervorrichtung eingerichtet, die Drehzahl des Lüfterantriebs basierend auf einer Temperatur in dem Gehäuse, einer Temperatur der Steuervorrichtung oder einer Temperatur des Umwälzvorrichtungsantriebs vorzugeben. Die eine oder mehreren Temperaturen können von jeweiligen Temperatursensoren erfasst werden, welche kommunikativ mit der Steuervorrichtung verbunden sind. Beispielsweise kann das Gehäuse einen Gehäusetemperatursensor in dem Gehäuse umfassen, die Steuervorrichtung einen Steuervorrichtungstemperatursensor in oder an der Steuervorrichtung oder der Umwälzvorrichtungsantrieb einen Umwälzvorrichtungstemperatursensor an oder in dem Umwälzvorrichtungsantrieb. Die Steuervorrichtung kann insbesondere dazu eingerichtet sein, die Drehzahl des Lüfterantriebs bei Überschreiten eines Temperaturschwellwerts durch eine der erfassten Temperatur zu erhöhen. Ausführungsformen können insbesondere die Kühlung von Komponenten in dem Gehäuse wie der Steuervorrichtung oder des Umwälzvorrichtungsantriebs bereitstellen oder eine Überhitzung der Komponenten verhindern.

Typischerweise umfasst der Badthermostat eine Bedienvorrichtung zum Bedienen des Badthermostats. Die Bedienvorrichtung ist typischerweise kommunikativ mit der Steuervorrichtung verbunden. Die Bedienvorrichtung ist bei Ausführungsformen an dem Gehäuse oder zumindest teilweise in dem Gehäuse angeordnet. Die Bedienvorrichtung kann eine Anzeige umfassen, insbesondere eine für den Benutzer des Badthermostats sichtbare Anzeige zum Anzeigen von Betriebsparametern. Die Bedienvorrichtung kann Bedienelemente aufweisen. Typischerweise ist die Bedienvorrichtung zur Vorgabe von Betriebsparametern eingerichtet, beispielsweise zur Vorgabe einer Badtemperatur, insbesondere einer Soll-Temperatur für die Flüssigkeit, oder zur Vorgabe einer Umwälzgeschwindigkeit für die Umwälzvorrichtung, beispielsweise einer Drehzahl des Umwälzvorrichtungsantriebs. Die Steuervorrichtung ist typischerweise dazu eingerichtet, den Badthermostat auf Grundlage der an der Bedienvorrichtung vorgegebenen Betriebsparameter zu steuern, insbesondere die Temperiervorrichtung basierend auf der Badtemperatur oder den Umwälzvorrichtungsantrieb basierend auf einer vorgegebenen Umwälzgeschwindigkeit.

Gemäß typischen Ausführungsformen ist ein Verfahren zum Temperieren einer Flüssigkeit in einem Badbehälter eines Badthermostats angegeben. Der Badthermostat kann insbesondere gemäß hierin beschriebenen Ausführungsformen ausgebildet sein. Typischerweise umfasst das Verfahren ein Betreiben eines Umwälzvorrichtungsantriebs einer Umwälzvorrichtung zum Umwälzen der Flüssigkeit. Insbesondere kann der Umwälzvorrichtungsantrieb durch eine Steuervorrichtung des Badthermostats mit einer ersten Drehzahl betrieben werden. Bei typischen Ausführungsformen umfasst das Verfahren ein Betreiben eines Lüfterantriebs einer Belüftungsvorrichtung zum Bereitstellen eines Luftstroms über einen in einem oberen Bereich des Badbehälters angeordneten Badrand des Badbehälters. Insbesondere kann der Lüfterantrieb durch die Steuervorrichtung mit einer zweiten Drehzahl betrieben werden. Typischerweise werden der Umwälzvorrichtungsantrieb und der Lüfterantrieb gleichzeitig mit verschiedenen Drehzahlen betrieben. Insbesondere sind die erste Drehzahl und die zweite Drehzahl verschieden. Bei Ausführungsformen umfasst das Verfahren ein Heizen der Flüssigkeit in dem Badbehälter, insbesondere unter Verwendung einer Temperiervorrichtung zum Temperieren der Flüssigkeit. Insbesondere kann die Flüssigkeit auf eine Maximaltemperatur gemäß hierin beschriebenen Ausführungsformen geheizt werden. Weitere typische Verfahren umfassen ein Kühlen der Flüssigkeit in dem Badbehälter, insbesondere unter Verwendung der Temperiervorrichtung. Die Flüssigkeit kann insbesondere auf eine Minimaltemperatur gemäß hierin beschriebenen Ausführungsformen gekühlt werden.

Typische Vorteile von Ausführungsformen umfassen beispielsweise, dass eine starke Abkühlung bzw. Erwärmung des Badrandes verhindert werden kann. Insbesondere kann eine Verbrennungsgefahr für einen Benutzer an dem Badrand oder an einer auf dem Badrand angeordneten Abdeckung vermieden werden. Weiter kann eine Betauung oder Vereisung des Badrandes verhindert oder reduziert werden. Bei Ausführungsformen kann der Lüfter vorteilhafterweise zur Kühlung von Komponenten und zur Bereitstellung des Luftstroms über den Badrand genutzt werden. Der Lüfter kann vorteilhafterweise je nach benötigtem Luftstrom gesteuert werden, insbesondere unabhängig von dem Umwälzvorrichtungsantrieb. Bei Ausführungsformen kann der Badrand insbesondere ohne eine zusätzlich auf, an oder in dem Badbehälter vorzusehende Vorrichtung temperiert werden. Typische Ausführungsformen können den Vorteil haben, einen Badthermostat mit reduzierter Verbrennungsgefahr, reduzierter Betauung oder reduzierter Eisbildung auf kostengünstige oder energiesparsame Weise, oder mit geringem Herstellungsaufwand bereitzustellen.

### Kurze Beschreibung der Zeichnungen

Nachfolgend werden Ausführungsbeispiele der Erfindung anhand von Zeichnungen näher erläutert. Darin zeigen:
- Fig. 1: eine schematische Schnittansicht eines Badthermostats gemäß einer typischen Ausführungsform;
- Fig. 2: eine schematische Schnittansicht eines Badthermostats gemäß einer weiteren typischen Ausführungsform;
- Fig. 3: eine schematische dreidimensionale Ansicht eines Badthermostats;
- Fig. 4: eine Detailansicht des Badthermostats der Fig. 3;
- Fig. 5: eine weitere Detailansicht des Badthermostats der Fig. 3 aus einer weiteren Perspektive;
- Fig. 6: eine schematische Darstellung eines Systems zur Steuerung des Lüfterantriebs und des Umwälzvorrichtungsantriebs; und
- Fig. 7: ein Verfahren in einer typischen Ausführungsform.

### Beschreibung der in den Figuren gezeigten Ausführungsbeispiele

Nachfolgend werden typische Ausführungsbeispiele der Erfindung beschrieben, wobei für gleiche oder ähnliche Teile teilweise gleiche Bezugszeichen verwendet werden und unter Umständen nicht mit jeder Figur nochmals erläutert werden. Die Erfindung ist nicht auf die nachfolgend beschriebenen typischen Ausführungsformen beschränkt. Zur Übersichtlichkeit können teilweise nicht alle jeweiligen Merkmale mit einem Bezugszeichen versehen sein.

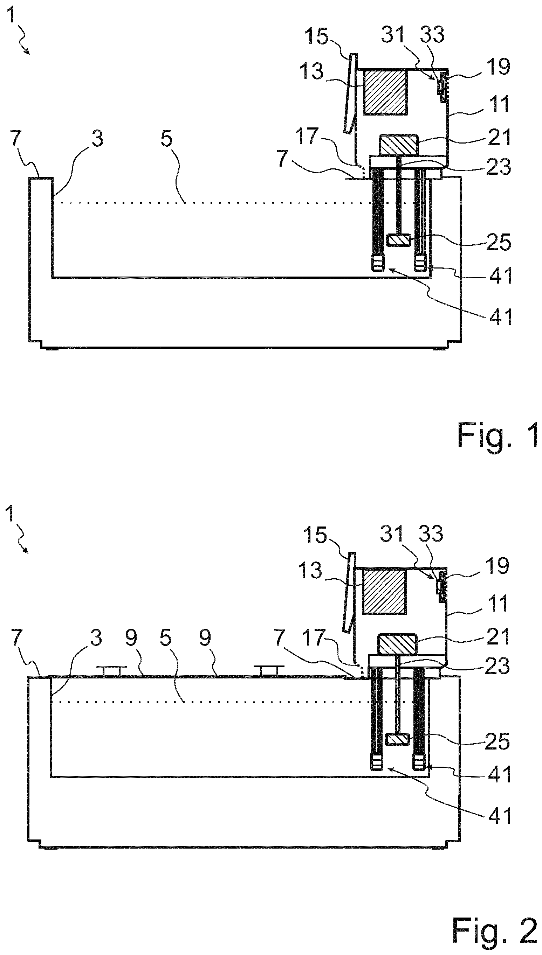

Fig. 1 zeigt eine schematische Schnittansicht eines Badthermostats 1. Der Badthermostat 1 umfasst einen Badbehälter 3, welcher mit einer Flüssigkeit 5 befüllbar ist. Der Badbehälter 3 umfasst in einem oberen Bereich, insbesondere an der Oberseite des Badbehälters 3, einen umlaufenden Badrand 7, welcher den nach oben offenen Badbehälter 3 in dem oberen Bereich umschließt. Der Badthermostat 1 weist weiter einen Badkopf mit einem auf dem Badbehälter 3 angeordneten Gehäuse 11 auf.

Der Badthermostat 1 weist weiter eine Umwälzvorrichtung auf, welche einen in dem Gehäuse 11 angeordneten Umwälzvorrichtungsantrieb 21 und eine außerhalb des Gehäuses 11 und in dem Badbehälter 3 angeordnete Pumpe 25 zum Umwälzen der Flüssigkeit 5 umfasst. Weiter umfasst die Umwälzvorrichtung eine Welle 23, über welche der Umwälzvorrichtungsantrieb 21 die Pumpe 25 antreibt. Der Badthermostat 1 umfasst weiter eine Temperiervorrichtung 41 zum Heizen oder Kühlen der Flüssigkeit 5. Die Temperiervorrichtung 41 ragt zumindest teilweise aus dem Gehäuse 11 nach unten in den Badbehälter 3, wo die Temperiervorrichtung 41 in die Flüssigkeit 5 eintaucht.

Der Badthermostat 1 umfasst eine Belüftungsvorrichtung mit einem Lüfter 31, welcher über einen Lüfterantrieb 33 antreibbar ist. Weiter umfasst die Belüftungsvorrichtung einen Einlass 19 für Luft in das Gehäuse 11 und einen in einem unteren Bereich des Gehäuses 11 angeordneten Auslass 17 für das Ausleiten eines Luftstroms aus dem Gehäuse 11 und über den Badrand 7 des Badbehälters 3. In der Fig. 1 ist der Auslass 17 als eine Mehrzahl an Lüftungsschlitzen ausgeführt, welche den Luftstrom aus dem Gehäuse 11 auf den Badrand 7 leiten. Bei Ausführungsformen, wie beispielsweise in der Fig. 1 gezeigt, verteilt sich der Luftstrom ausgehend von dem Auslass 17 über den Badrand 7. Insbesondere kann der Luftstrom beispielsweise auch über Bereiche des Badrandes 7 auf der gegenüberliegenden Seite der Öffnung des Badbehälters 3 strömen.

Wie beispielsweise in Fig. 2 dargestellt, kann bei Ausführungsformen eine Abdeckung 9 auf dem Badrand 7 angeordnet sein. Die Abdeckung 9 bedeckt die Öffnung des Badbehälters 3 und teilweise den Badrand 7. In Fig. 2 umfasst die Abdeckung zwei Deckel mit jeweils einem Griff. Die vorliegende Offenbarung ist jedoch nicht auf eine solche Ausführung beschränkt. Bei weiteren Ausführungsformen kann eine Abdeckung stattdessen keinen (Fig. 1) Deckel, genau einen Deckel oder mehr als zwei Deckel umfassen. Bezugnehmend auf die Figuren 1 und 2 kann der von dem Lüfter 31 erzeugte und aus dem Gehäuse 11 über den Badrand 7 oder über die Abdeckung 9 strömende Luftstrom eine Verbrennungsgefahr, Betauung oder Vereisung an dem Badrand 7 oder an der Abdeckung 9 verhindern oder verringern.

In Figuren 1 und 2 umfasst der Badthermostat 1 eine in dem Gehäuse 11 angeordnete Steuervorrichtung 13 zum Steuern des Badthermostats 1. Der von dem Lüfter 31 erzeugte Luftstrom strömt durch das Gehäuse 11 und dabei insbesondere zumindest teilweise über die Steuervorrichtung 13 und den Umwälzvorrichtungsantrieb 11, bevor der Luftstrom durch den Auslass 17 aus dem Gehäuse 11 austritt. In dem Gehäuse 11 stellt der Lüfter 31 mittels des Luftstroms eine Kühlung für die Steuervorrichtung 13 und den Umwälzvorrichtungsantrieb 21 bereit.

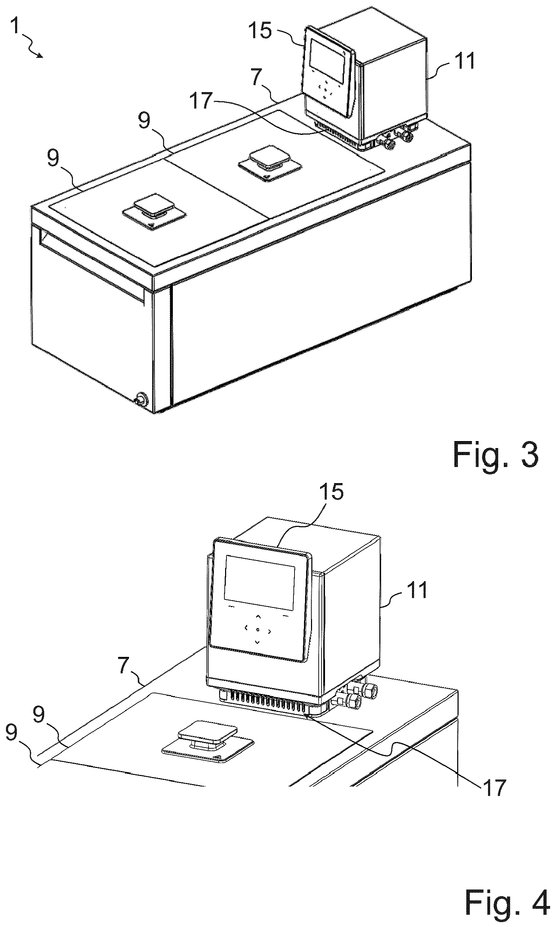

An dem Gehäuse 11 ist weiter eine Bedienvorrichtung 15 des Badthermostats angeordnet. Wie in den Figuren 3 und 4 dargestellt, umfasst die Bedienvorrichtung 15 insbesondere eine Anzeige zur Darstellung von Betriebsparametern und mehrere Bedienelemente zur Eingabe von Betriebsparametern. Die Figuren 3 bis 5 zeigen dreidimensionale Ansichten eines Badthermostats 1 mit einer auf dem Badrand 7 angeordneten Abdeckung 9, insbesondere ähnlich zu dem Badthermostat 1 der Fig. 2. Die Lüftungsschlitze des Auslasses 17 sind an der der Öffnung des Badbehälters 3 zugewandten Seite des Gehäuses 11 vorgesehen.

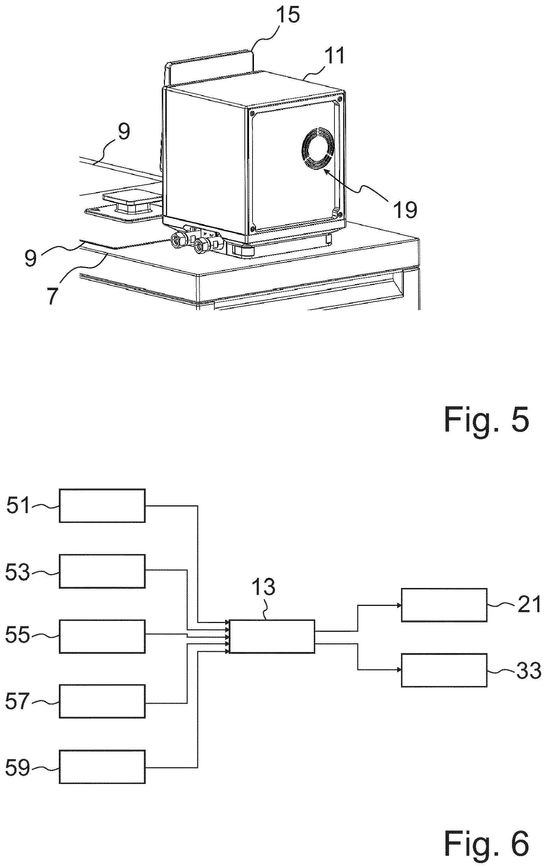

Fig. 5 zeigt insbesondere die der Öffnung des Badbehälters 3 abgewandte Seite des Gehäuses 11, auf welcher der Einlass 19 zur Zuführung von Luft zu dem Lüfter 31 vorgesehen sind. Der Einlass 19 umfasst eine Mehrzahl an Durchgangsöffnungen, hinter welchen der Lüfter 31 auf der Innenseite des Gehäuses 11 befestigt ist.

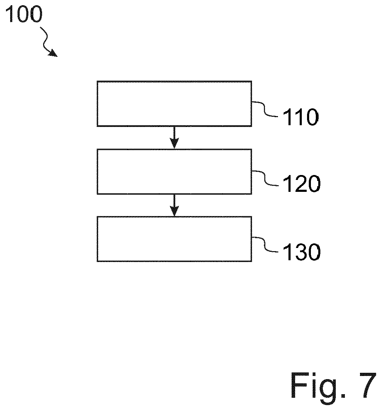

Fig. 6 zeigt schematisch ein System zum Steuern des Umwälzvorrichtungsantriebs 21 und des Lüfterantriebs 33 unter Verwendung der Steuervorrichtung 13. Das System ist Teil eines Badthermostats 1. Die Steuervorrichtung 13 erhält Betriebsparameter des Badthermostats 1, beispielsweise eine vorgegebene Drehzahl 51 oder Umwälzgeschwindigkeit für den Umwälzvorrichtungsantrieb 21. Die Drehzahl 51 (bei Ausführungsformen auch in Form einer prozentualen Leistungsangabe) kann zum Beispiel über die Bedienvorrichtung 15 durch einen Benutzer vorgegeben werden. Bei weiteren Ausführungsformen kann die Drehzahl 51 durch die Steuervorrichtung 13 auf Basis weiterer Betriebsparameter berechnet werden. In Fig. 6 umfassen die Betriebsparameter weiter eine Temperatur 53 des Umwälzvorrichtungsantriebs 21, eine Temperatur 55 der Steuervorrichtung 13, eine Temperatur 57 der Flüssigkeit 5 in dem Badbehälter 3 und eine Temperatur 59 der Umgebung des Badthermostats 1. Die Temperaturen 53, 55, 57, 59 werden von jeweiligen Temperatursensoren des Badthermostats 1 erfasst und an die Steuervorrichtung 13 übermittelt. Die Steuervorrichtung 13 ist dazu eingerichtet, den Umwälzvorrichtungsantrieb 21 und den Lüfterantrieb 33 basierend auf der vorgegebenen Drehzahl 51 und den Temperaturen 53, 55, 57, 59 zu steuern, wie beispielsweise in Zusammenhang mit Fig. 7 erläutert. In weiteren Ausführungsformen kann die Steuervorrichtung 13 weitere Betriebsparameter erhalten oder weitere Komponenten des Badthermostats 1 steuern.

Fig. 7 zeigt ein Flussdiagramm eines typischen Verfahrens 100 zum Temperieren einer Flüssigkeit 5 in einem Badbehälter 3 eines Badthermostats 1. Bei Block 110 wird die Flüssigkeit auf eine vorgegebene Temperatur temperiert, insbesondere geheizt oder gekühlt. Die Temperatur wird beispielsweise über die Bedienvorrichtung vorgegeben. Bei Block 120 erfolgt ein Betreiben des Umwälzvorrichtungsantriebs 21 zum Antreiben einer Pumpe 25 zum Umwälzen der Flüssigkeit 5. Der Umwälzvorrichtungsantrieb 21 wird beispielsweise durch die Steuervorrichtung 13 mit einer vorgegebenen, ersten Drehzahl 51 betrieben. Bei Block 130 erfolgt ein Betreiben des Lüfterantriebs 33 des Lüfters 31 zum Bereitstellen eines Luftstroms über den Badrand 7 des Badbehälters 3. Der drehzahlvariable Lüfter 31 wird zumindest zeitweise gleichzeitig mit dem Umwälzvorrichtungsantrieb und mit einer von der ersten Drehzahl 51 verschiedenen, zweiten Drehzahl betrieben. Der drehzahlvariable Lüfter 33 wird in Abhängigkeit der Temperaturen 53, 55, 57, 59 gesteuert. Die Drehzahl des Lüfters 31 wird erhöht, wenn eine der Temperaturen 53, 55, 57, 59 einen jeweiligen Schwellwert überschreitet, wobei die Schwellwerte für die Temperaturen 53, 55, 57, 59 unterschiedlich sind. Die Drehzahl des Lüfters 33 wird auch dann erhöht, wenn die Temperatur 55 der Flüssigkeit 5 einen weiteren Schwellwert unterschreitet. Durch die Anpassung der Drehzahl des Lüfters 31 kann bei hohen bzw. niedrigen Temperaturen eine Verbrennungsgefahr bzw. eine Betauung oder Eisbildung verhindert werden.

## Patentansprüche

1. Badthermostat (1), umfassend
- einen Badbehälter (3) zur Aufnahme einer Flüssigkeit (5), wobei der Badbehälter (3) in einem oberen Bereich einen Badrand (7) aufweist;
- eine Umwälzvorrichtung zum Umwälzen der Flüssigkeit (5), wobei die Umwälzvorrichtung einen Umwälzvorrichtungsantrieb (21) aufweist; und
- eine Belüftungsvorrichtung zum Bereitstellen eines Luftstroms über den Badrand (7) des Badbehälters (3), wobei die Belüftungsvorrichtung einen Lüfter (31) mit einem Lüfterantrieb (33) aufweist.

2. Badthermostat (1) nach Anspruch 1, weiter umfassend eine Steuervorrichtung (13), welche dazu eingerichtet ist, den Umwälzvorrichtungsantrieb (21) und den Lüfterantrieb (33) individuell zu steuern.

3. Badthermostat (1) nach Anspruch 2, wobei die Steuervorrichtung (13) dazu eingerichtet ist, den Umwälzvorrichtungsantrieb (21) mit einer ersten Drehzahl und den Lüfterantrieb (33) mit einer von der ersten Drehzahl verschiedenen, zweiten Drehzahl zu betreiben.

4. Badthermostat (1) nach einem der vorhergehenden Ansprüche, wobei die Belüftungsvorrichtung zumindest teilweise oberhalb des Badbehälters (3) angeordnet ist.

5. Badthermostat (1) nach einem der vorhergehenden Ansprüche, weiter umfassend eine Temperiervorrichtung (41) zum Heizen der Flüssigkeit (5) auf eine Maximaltemperatur oberhalb von 90°C und/oder zum Kühlen der Flüssigkeit (5) auf eine Minimaltemperatur unterhalb von 0°C.

6. Badthermostat (1) nach einem der vorhergehenden Ansprüche, weiter umfassend ein auf dem Badbehälter (3) angeordnetes Gehäuse (11), in welchem die Belüftungsvorrichtung angeordnet ist, wobei das Gehäuse (11) mindestens einen Auslass (17) zum Ausleiten des Luftstroms aus dem Gehäuse (11) und über den Badrand (7) aufweist.

7. Badthermostat (1) nach Anspruch 6, wobei die Steuervorrichtung (13) und/oder der Umwälzvorrichtungsantrieb (21) für die Umwälzvorrichtung zumindest teilweise in dem Gehäuse (11) angeordnet ist.

8. Badthermostat (1) nach Anspruch 7, wobei die Belüftungsvorrichtung dazu eingerichtet ist, zumindest einen Teil des Luftstroms über die Steuervorrichtung (13) zum Kühlen der Steuervorrichtung (13) zu strömen.

9. Badthermostat (1) nach einem der Ansprüche 7 oder 8, wobei die Belüftungsvorrichtung dazu eingerichtet ist, zumindest einen Teil des Luftstroms über den Umwälzvorrichtungsantrieb (21) der Umwälzvorrichtung zum Kühlen des Umwälzvorrichtungsantriebs (21) zu strömen.

10. Badthermostat (1) nach einem der Ansprüche 7 bis 9, wobei die Belüftungsvorrichtung eine Luftstromführung zum Lenken des von dem Lüfter (31) erzeugten Luftstroms in dem Gehäuse (11) und/oder aus dem Gehäuse (11) umfasst.

11. Badthermostat (1) nach einem der Ansprüche 2 bis 10, wobei die Steuervorrichtung (13) dazu eingerichtet ist, eine Drehzahl des Lüfterantriebs (33) basierend auf einer Betriebsbedingung der Temperiervorrichtung (41) vorzugeben.

12. Badthermostat (1) nach Anspruch 11, wobei die Betriebsbedingung eine Temperatur (57) der Flüssigkeit (5) umfasst.

13. Badthermostat (1) nach einem der Ansprüche 6 bis 12, wobei die Steuervorrichtung (13) eingerichtet ist, die Drehzahl des Lüfterantriebs (33) basierend auf einer Temperatur in dem Gehäuse (11), einer Temperatur (55) der Steuervorrichtung (13) und/oder einer Temperatur (53) des Umwälzvorrichtungsantriebs (21) der Umwälzvorrichtung vorzugeben.

14. Badthermostat (1) nach einem der vorhergehenden Ansprüche, weiter umfassend eine Abdeckung für den Badbehälter (3), wobei die Belüftungsvorrichtung zum Bereitstellen eines Luftstroms über den Badrand (7) des Badbehälters (3) und über die Abdeckung eingerichtet ist, wenn die Abdeckung auf dem Badbehälter (3) angeordnet ist.

15. Verfahren zum Temperieren einer Flüssigkeit (5) in einem Badbehälter (3) eines Badthermostats (1), mit
- Betreiben eines Umwälzvorrichtungsantriebs einer Umwälzvorrichtung zum Umwälzen der Flüssigkeit (5); und
- Betreiben eines Lüfterantriebs (33) einer Belüftungsvorrichtung zum Bereitstellen eines Luftstroms über einen in einem oberen Bereich des Badbehälters (3) angeordneten Badrand (7) des Badbehälters (3);
wobei der Umwälzvorrichtungsantrieb (21) und der Lüfterantrieb (33) gleichzeitig mit verschiedenen Drehzahlen betrieben werden.
